# NEUE EUROPÄISCHE PATENTSCHRIFT

(11) **EP 0 566 857 B2**
(45) Veröffentlichungstag und Bekanntmachung des Hinweises auf die Entscheidung über den Einspruch: **05.02.2003**
(45) Hinweis auf die Patenterteilung: 04.12.1996
(21) Anmeldenummer: 93103923.4
(22) Anmeldetag: 11.03.1993
(51) Int. Cl.: B62J 9/00

(54) **Vorrichtung zur Verriegelung von Zubehör oder Ausrüstungsgegenständen**
Device for the attachment of accessoires or equipment
Dispositif pour attacher des accessoires ou équipements

(30) Priorität: 12.03.1992 DE 4207842; 14.04.1992 DE 4212415
(43) Veröffentlichungstag der Anmeldung: 27.10.1993
(73) Patentinhaber: RIXEN & KAUL GmbH, 42699 Solingen (DE)
(72) Erfinder: Rixen, Edgar, W-5650 Solingen 11 (DE); Flammann, Norbert, Dipl.-Ing., W-5650 Solingen (DE)

(56) Entgegenhaltungen:
- EP-A- 0 523 505
- DE-A- 4 003 474
- DE-C- 387 688
- DE-U- 1 787 471
- DE-U- 8 326 235
- GB-A- 2 145 810
- US-A- 1 408 993

## Beschreibung

Die Erfindung betrifft eine Vorrichtung zur Befestigung von Zubehör an einem Zweirad nach dem Oberbegriff von Anspruch 1.
Die Vorrichtung kann überall da Anwendung finden, wo mit einem Handgriff irgendein Gegenstand zuverlässig angehängt oder befestigt werden soll und anschließend in gleicher Weise von Hand wieder abgenommen werden soll.
Aus der DE-OS 40̸0̸3474 ist eine Befestigungsmöglichkeit für Gepäckstücke an Zweirädern bekannt, bei der das Gepäckstück mit einem Anker zunächst in ein offenes Gelenk eingehängt wird und dann durch Schwenken nach unten mit einem Verschlußstück verriegelt wird. Bei der bekannten Lösung wird das Gepäckstück an der Lenkstange befestigt und der Riegel wird von oben an einer Handhabe im Gehäuse des Verschlußstücks verschoben.

Diese Lösung ist vorteilhaft für relativ schwere Gepackstücke, die am Zweirad befestigt werden sollen. Nachteilig dabei ist, daß die Befestigung etwa an der Unterseite eines Zweiradsattels schwierig wird und daß eine solche Befestigung für kleines Zubehör, wie ein Tachometer o.ä., zu aufwendig ist.

Aus der GB 2145810̸A ist eine Vorrichtung zur Befestigung einer Lampe an einem Fahrrad bekannt, die mit einem Schließstück und einem Anker versehen ist. Der Anker hat eine Führungsschiene mit Hinterschnitt, die auf ein entsprechend angepaßtes Führungselemnt am Schließstück aufgesteckt wird. Die Lampe wird auf das Schlleßstück aufgeschoben und nach Erreichen einer Endlage rastet ein am freien Ende einer Zunge angeordneter Riegel am Schließstück hinter einen Vorsprung an der Lampe. In unmittelbarer Nähe des Riegels ist eine Lippe angeformt, mit Hilfe derer der Riegel von Hand betätigt werden kann. Nachteilig bei dieser Lösung ist, daß der Riegel in Aufschieberichtung der Lampe stirnseitig angeordnet ist und deshalb schwerer zugänglich ist. Es kommt hinzu, daß der Riegel mit dem Fingernagel z.B, hintergriffen und abgezogen werden muß, was zu Verletzungen führen kann.

Der Erfindung liegt deshalb die Aufgabe zugrunde, eine zur Bedienung gut zugängliche und einfach zu bedienende Vorrichtung für universelle Befestigungen zu finden.

Die Lösung dieser Aufgabe ist dadurch gekennzeichnet, daß die Handhabe zur Betätigung des Riegels auf einer Längsseite des Verschlußstücks angeordnet ist, von wo aus der Riegel gegen die Kraft einer Feder betätigt wird und daß der Riegel sich quer zur Längsmittelebene des in Einschubrichtung T-förmig ausgebildeten Ankerprofils und zu einer Längsseite des Verschlußstückes erstreckt.

Als Längsseite des Verschlußstückes, von der aus die Handhabe zu betätigen ist, werden die Oberflächenteile des Verschlußstückes bezeichnet, aus denen ein sich quer zur Längsrichtung des Profils eines in das Schließstück eingeführten Ankers erstreckender Riegel herausragen kann.

Eine bevorzugte Ausgestaltung der Erfindung ist in Anspruch 2 wiedergegeben. In der einfachsten Ausfuhrung der Erfindung ist die Blattfeder selbst der Riegel, der sich mit der Breite der Blattfeder in eine Nut am Anker einlegt und damit dessen Herausziehen verhindert. In seiner entspannten Position verriegelt der Riegel den Anker im Verschlußstuck. Zur Entriegelung wird die Blattfeder gebogen oder geknickt. Die Betätigung des Riegels erfolgt orthogonal zur Einschubrichtung des Zubehörs in das Verschlußstück. Die von diesen beiden Richtungen aufgespannte Ebene steht rechtwinklig zur Ebene des Zweirades. Weiterhin erfolgt die eigentliche Bewegung des Riegels orthogonal zu seiner Betätigungsrichtung. Sowohl die Biegung als auch das Knicken der Blattfeder zur Entriegelung erfolgt durch axialen Druck auf diese in Richtung ihrer Längserstrekkung jedoch im Abstand dazu. Die Blattfeder ist schon aus Gründen der gedrungenen Bauweise ein bevorzugtes Bauelement, die alternative Bedienbarkeit der Vorrichtung zum Entriegeln des Zubehörs ist jedoch nicht zwingend auf die Form der Blattfeder angewiesen.
Damit wird sichergestellt, daß die Blattfeder zur gewünschten Seite ausknickt. Der gleiche Effekt kann ohne Mittenversatz der Handhabe durch eine gekrümmte Blattfeder erreicht werden. Die erfindungsgemäße Lösung erlaubt eine Befestigung von Zubehör am Zweirad mit einer minimierten Kraglänge des Zubehörs vom Zweiradrohr oder vom Sattel. Die Entriegelung kann leicht von der Rohrseite her erfolgen.

In erster Linie ist an die Ausgestaltung der Erfindung nach Anspruch 3 gedacht. Die zwei Handhaben
sind an der gleichen Blattfeder vorgesehen. Dadurch ergibt sich der Vorteil, daß das Zurückziehen des Riegels sowohl durch die Betätigung beider Handhaben gemeinsam erfolgen kann als auch durch die Betätigung jeder einzelnen Handhabe. Die beiden Handhaben sind dabei auf gegenüberliegenden Seiten des Verschlußstücks angeordnet. Die Handhaben müssen nicht unbedingt das Langsende der Blattfeder bilden, sind jedoch beidseits des Riegelabschnitts der Blattfeder an dieser vorgesehen. Der langgestreckte Riegel wird beidseits des Ortes der Verriegelung geführt bzw. abgestützt. Die eingangs genannte Aufgabe wird besonders vorteilhaft durch die alternative Bedienbarkeit der Befestigungsvorrichtung mit Handhaben an unterschiedlichen, voneinander wegweisenden Seiten
des Riegels und der Vorrichtung gelöst. Bevorzugt sind die Handhaben an gegenüberliegenden Seiten des Gehäuses des Verschlußstückes angeordnet.

In der Ausgestaltung der Erfindung nach Anspruch 4 sind die Handhaben jedoch am Ende der Blattfeder ausgebildet. Durch Betätigen einer Handhabe wird die Blattfeder auf Knickung belastet, wenn das Widerlager am gegenüberliegenden Ende der Blattfeder angeordnet ist oder die Blattfeder wird auf Biegung beansprucht, wenn das Wiederlager am gleichen Längsabschnitt der Blattfeder jedoch auf gegenüberliegender Seite bezüglich der Handhabe vorgesehen ist. Die Handhabe ist zu diesem Zwecke leicht von der Blattfeder abkragend ausgebildet. Alternativ kann auch die Blattfeder im Zustand der Verriegelung leicht gebogen ausgebildet sein, so daß sie auf axialen Druck leicht durch Ausknicken reagiert.
Bei der nach Anspruch 6 ausgebildeten Ausgestaltung der Erfindung wird die Blattfeder im wesentlichen auf Knickung beansprucht. Durch eine leicht außermittige Anordnung der Handhaben kommt ein Anteil Biegung von vornherein dazu, damit die Richtung der ausknikkenden Blattfeder zuverlässig in Richtung auf Entriegelung geht.

Für eine starre Verriegelung, die nicht von der geringen Biegesteifigkeit der Blattfeder bestimmt wird, ist die Weiterbildung der Erfindung nach Anspruch 7 vorgesehen.

Der Kragen kann, wie mit Anspruch 8 verfolgt, im Verschlußstück abgestützt sein und entlastet dadurch die Blattfeder von den Kräften, die sonst von dem Anker auf das Verschlußstück über den eigentlichen Riegel ausgeübt würden.

Nachstehend werden im wesentlichen Ausgestaltungen der Erfindung beschrieben, die auch durch die Betätigung beider Handhaben gleichzeitig eine Entriegelung bewirken.

Es ist vorgesehen, die Erfindung entsprechend Anspruch 9 weiterzubilden. Die kniegelenkige Ausführung des Verbindungselementes zwischen den zwei Handhaben hat gegenüber der auf Knickung beanspruchten Blattfeder den Vorzug, daß die Auslenkung des Riegels bei Betätigung einer der Handhaben größer ist. Die beiden Schenkel des Kniegelenks können in Gelenknähe einen Riegel tragen oder selbst als Riegel ausgebildet sein.

Wenn das Maß, um das die Befestigungsvorrichtung und schließlich das befestigte Zubehör von dem Rahmenteil z.B. eines Zweirades abkragen, es zuläßt, ist eine Ausgestaltung der Erfindung nach Anspruch 10̸ vorgesehen, bei der die Brücke von einer Schrauben- oder ähnlichen Feder in die Verriegelungsposition gedrückt wird.
Bei dieser Ausgestaltung werden die Handhaben nicht in das Gehäuse der Befestigungsvorrichtung eingedrückt, sondern quer dazu betätigt. Dabei kann die Betätigung "nach oben" oder "nach unten" erfolgen.

Auch die mit Anspruch 11 verfolgte Drehlösung bei der Ver- bzw. Entriegelung kann, je nach Zugänglichkeit der Befestigungsvorrichtung vorteilhaft sein. Sie bietet zudem die Möglichkeit, die Handhaben als Drehknopf auszubilden oder als bei Betätigung schwenkende Tasten zu gestalten.

Eine ebenfalls geringe Bauhöhe erlaubt die Weiterbildung der Erfindung nach Anspruch 12. Sie kann besonders leichtgängig ausgebildet werden, da keine Kraftschwelle, wie etwa bei der ausknickenden Blattfeder zu Beginn der Betätigung zu überwinden ist.

Soweit nicht ausdrücklich Gegenteiliges beschrieben wird, sollen vorzugsweise Handhaben und Riegel als ein Teil ausgebildet werden.

Die Erfindung wird im einzelnen anhand der Zeichnung näher erläutert, dabei zeigen :
- Fig. 1 :: Ein Zweirad mit daran befestigtem Zubehör;
- Fig. 2:: eine Befestigungsvorrichtung für Zubehör an den Sattelholmen;
- Fig. 3 :: einen Schnitt nach Linie III-III in Fig.2;
- Fig. 4 :: eine alternative Befestigungsvorrichtung für Zubehör an einem Rahmenrohr;
- Fig. 5 :: einen Schnitt nach Linie V - V in Fig.4;
- Fig. 6 :: eine Alternativlösung zu Fig.4;
- Fig. 7 :: einen Schnitt nach Linie VII - VII in Fig.6;
- Fig. 8:: eine Alternativlösung ähnlich der in Fig.2 gezeigten Ausführung
- Fig. 9:: einen Schnitt nach Linie IX -- IX in Fig.10̸
- Fig. 10:: einen Schnitt nach Linie X - X in Fig.9;
- Fig. 11:: eine Alternativlösung zu Fig.8;
- Fig. 12:: eine weitere Alternativlösung zu Fig.8;

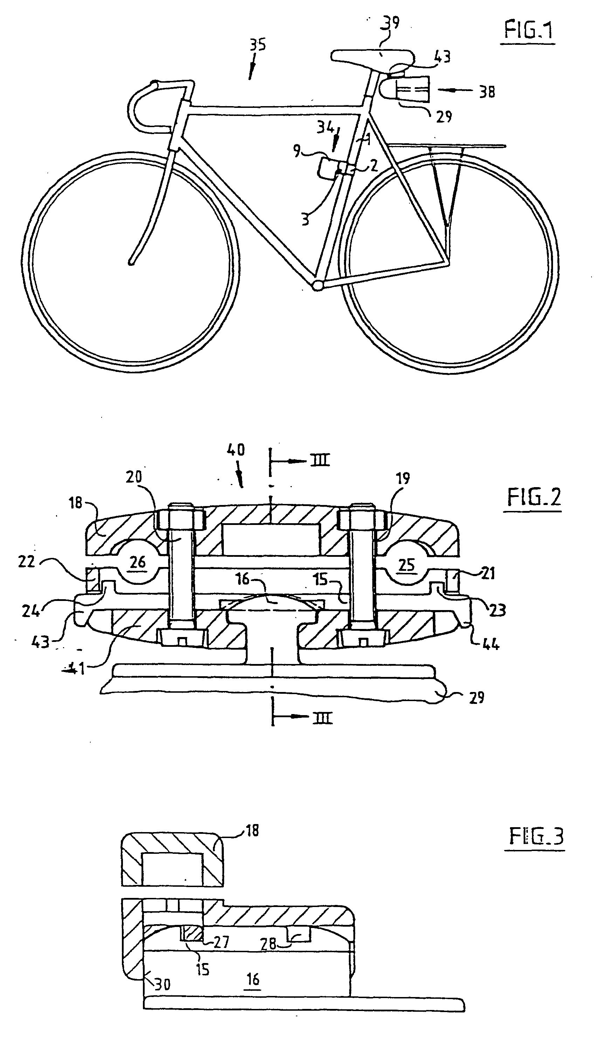

Fig.1 zeigt ein Zweirad 35, an dem Zubehör 9 und 29 am Rahmenrohr 1 bzw. am Sattel 39 befestigt ist. Das Zubehör wird jeweils in Richtung der Pfeile 34, 38 aufgeschoben und in der gezeigten Position automatisch verriegelt.

Die Befestigungsvorrichtung 40̸ in Fig.2 besteht im wesentlichen aus drei Teilen, nämlich aus einem Verschlußstück 41, einem Anker 16 und einem Riegel 15. Das Verschlußstück 41 ist durch Schrauben 19, 20̸ mit einer Spannplatte 18 verbunden. Zwischen dem Verschlußstück und der Spannplatte sind zwei Durchtrittsöffnungen 25, 26 vorgesehen, mit denen die Befestigungsvorrichtung 40̸ an den Holmen unten am Sattel 39 festgeklemmt werden. In das Verschlußstück ist eine T-förmige Ausnehmung eingearbeitet, in die der Anker 16, der das Zubehör 29 trägt, bis zum Anschlag 30̸ eingeschoben ist (Pfeil 38 in Fig.1). Der Anker 16 hat zwei Einschnitte 27, 28, in die der langgestreckte Riegel 15 eingreift. Dieser Riegel 15 erstreckt sich quer zur Einschubrichtung 38 zwischen dem Zubehör und dem Sattel 39 durch die Befestigungsvorrichtung 40̸ und trägt an seinen beiden von den Außenseiten zugänglichen Enden Handhaben 43, 44. Der Riegel 15 hat die Form einer gestreckten Blattfeder aus Kunststoff. Im Bereich der beiden an den Enden des langgestreckten Riegels befindlichen Handhaben 43, 44 sind Vorsprunge 23, 24 vorgesehen, die im Zusammenwirken mit den Widerlagern 21, 22 ein Durchschieben des gesamten Riegels durch die Befestigungsvorrichtung verhindern. Diese Anordnung von Widerlagern und Vorsprüngen bildet eine Abstützung und Führung des Riegels 15 am Schließstück 41 und erlaubt ein Eindrücken der Handhaben in die Befestigungsvorrichtung, wobei der als Blattfeder ausgebildete Riegel 15 ausknickt und dabei den Einschnitt 27 verläßt. In dieser ausgelenkten Position des Riegels kann das Zubehör 29 mitsamt dem Anker aus der Befestigungsvorrichtung herausgezogen werden.

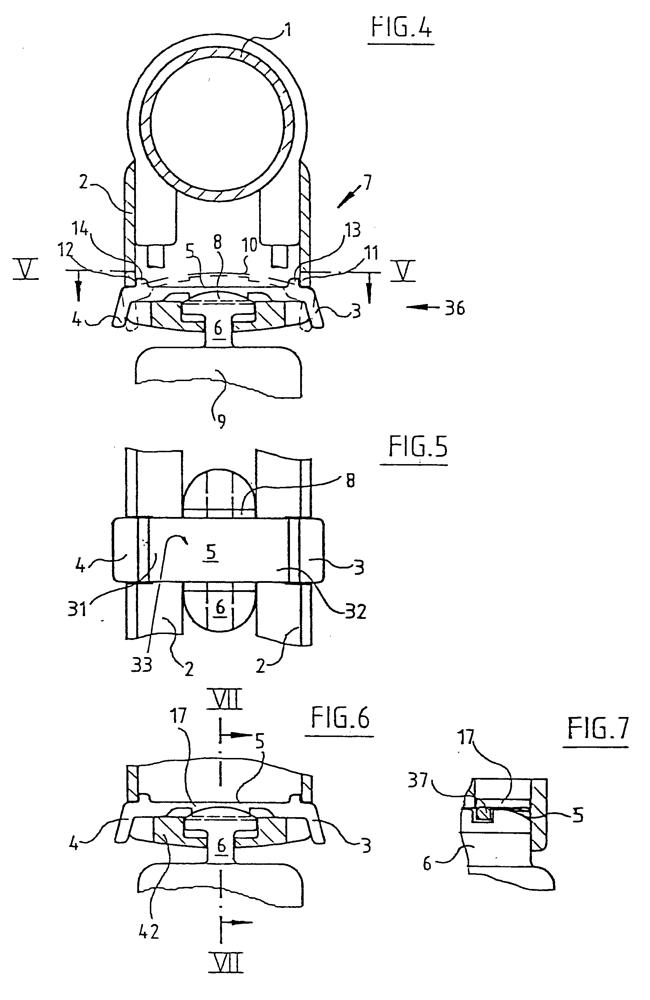

Fig.4 zeigt eine aufgeschnittene Befestigungsvorrichtung 2, die vom Rahmenrohr 1 getragen wird und das Zubehör 9 hält. Die Entriegelung des Zubehörs 9 erfolgt mit Hilfe der Handhabe 3. Das Zubehör 9 ragt mit seinem Anker 6 und dem daran ausgebildeten T - Profil in das Verschlußstück 7 und wird dort von dem Riegel 5 in der gezeigten Position gehalten. Der Riegel 5 erstreckt sich orthogonal zur Einschubrichtung 34 (Fig.1) zwischen dem Zubehör und dem Rohr 1 quer zu der vom Fahrradrahmen aufgespannten Zweiradebene hindurch. Da abgestellte Zweiräder häufig von einer Seite nicht zugänglich sind, ist durch die Zugänglichkeit des Riegels von beiden Seiten des Fahrrades stets eine Betätigung der Befestigungsvorrichtung möglich. An den beiden Längsenden 31, 32 des Riegels 5 sind zwei Handhaben 3, 4 vorgesehen, die von außen zur Betätigung des Riegels zugänglich sind. An den Handhaben 3, 4 sind Vorsprünge 13, 14 vorgesehen, die sich in Richtung der Längserstreckung des Riegels 5 an Widerlagern 11, 12 der das Rohr 1 umschließenden Befestigungsvorrichtung abstützen und so ein Herausfallen des als Blattfeder ausgebildeten Riegels 5 verhindern. Die Handhaben 3, 4 sind leicht außermittig zur Längsachse des Riegels 5 angeordnet, so daß der Riegel beim Eindrücken der Handhaben zuverlässig in die gezeigte Position 10̸ ausknickt. Die Handhaben 3, 4 können einzeln oder gemeinsam zusammengedrückt werden. Der Riegel 5 knickt beim Eindrücken mindestens einer Handhabe soweit in die Position 10̸ aus, daß der Anker 6 freigegeben wird und mit seinem T - Profil 8 aus der Befestigungsvorrichtung 2 entgegen der Richtung 34 herausgezogen werden kann.

Wie in Fig.5 gezeigt, liegt der Riegel 5 zum einen in dem Einschnitt 33 im Anker 6 des Zubehörs und wird zum anderen unmittelbar daneben im Gehäuse der Befestigungsvorrichtung 2 geführt, um ein Kippen des Riegels bei einem Versuch, das verriegelte Zubehör herauszureißen, zu vermeiden.

Um den als Blattfeder ausgebildeten Riegel 5 weitestgehend von den Kräften zwischen Anker und Verschlußstück zu entlasten, ist in der in Fig.6 und Fig.7 gezeigten Ausführungsform ein Kragenstück 17 an dem Riegel 5 vorgesehen, das mit seinem abstehenden Kragen 37 den Anker 6 im Gehäuse der Befestigungsvorrichtung 2 verriegelt Da der Kragen 37, so wie der Riegel 5 in Fig. 6 sowohl in das Vorrichtungsgehäuse als auch in den Anker 6 eingreift, bleibt der Riegel 5 von von den Kräften zwischen Gehäuse und Anker unbelastet.

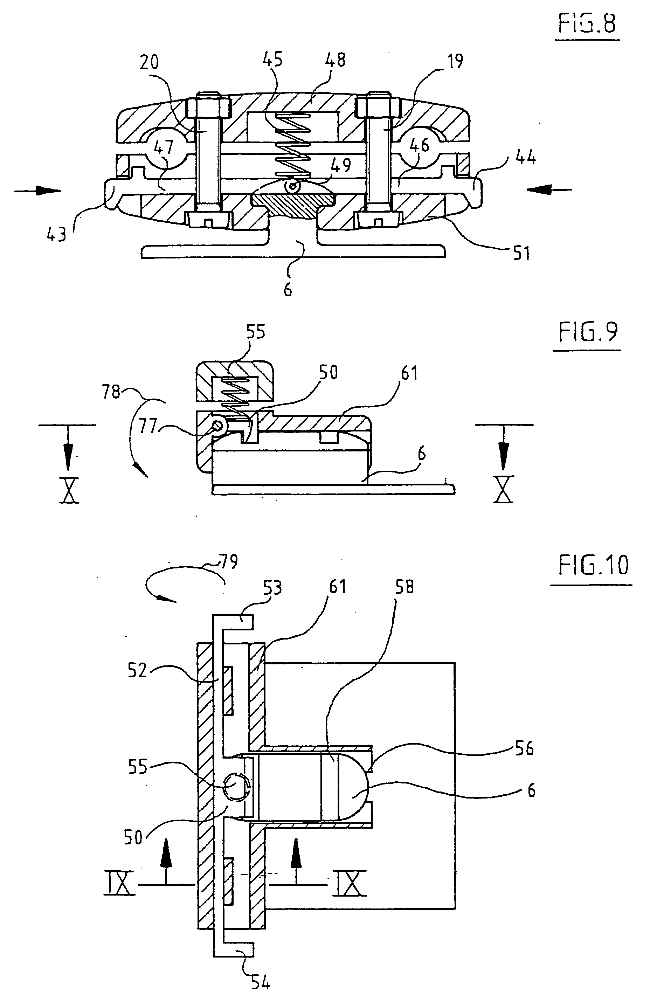

Die Ausführungsform der Erfindung nach Fig.8 entspricht im wesentlichen der Ausführungsform nach Fig.2. Die Blattfeder ist durch ein Paar von Schenkeln, die durch ein Kniegelenk 49 im Bereich des Riegels verbunden sind, ersetzt worden. Die Feder 45 spannt das Kniegelenk 49 in der gestreckten Lage der Schenkel 46, 47, das ist die Verriegelungsposition, gegen das Verschlußstück 51 und stützt sich an der Spannplatte 48 ab. Die Handhaben 43, 44 sind, bezogen auf die Längserstreckung der Schenkel 46, 47, leicht außermittig -- in der Zeichnung nach unten -- versetzt angeordnet, so daß bei Eindrücken der Handhaben 43, 44 das Knie am Gelenk 49 gegen die Kraft der Feder einknickt und den Anker 6 freigibt. Der Anker 6 mit dem daran zu befestigenden Zubehör kann dann senkrecht zur Zeichenebene aus dem Verschlußstück herausgezogen werden.

Die in den Fig.9 und Fig.10̸ gezeigte Ausführungsform der Erfindung hat einen schwenkbaren hakenförmigen Riegel 50̸, der mit einem Gelenk 77 mit dem Verschlußstück 61 verbunden ist. Der Riegel 50̸ wird von einer Feder 55 in Schließstellung gedrückt und rastet dabei in den Ankereinschnitt 58 ein.
Der Riegel 50̸ ist an einer im Schließstück schwenkbaren Welle vorgesehen, deren nach außen verlängerte Enden tastenförmige von der Welle abkragende Handhaben 53, 54 tragen, mit denen die Welle 52 gedreht werden kann, Die Welle 52 mit dem Riegel 50̸ dreht sich bei Betätigung der Handhaben 53, 54 in Richtung der Pfeile 78, 79. Zum Entriegeln wird die Welle 52 mit dem Riegel 50̸ in Richtung des Pfeiles 78 gedreht und der Anker 6 mit dem nicht gezeigten Zubehör kann aus der Führung 56 -- in der Zeichnung nach rechts -- herausgezogen werden.

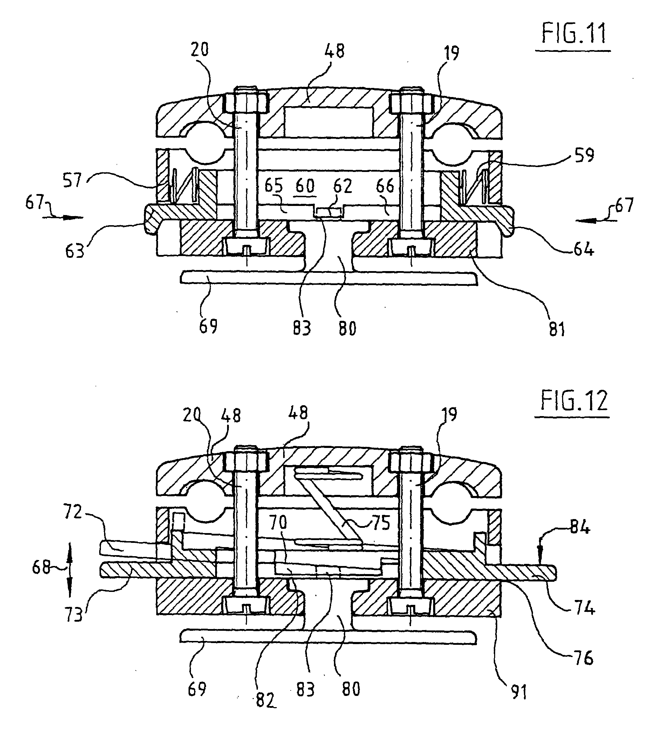

Die in Fig. 11 gezeigte Ausführungsform besteht aus einem Verschlußstück 81 und einer Spannplatte 48, die mit zwei Schrauben 19, 20̸ zusammengeschraubt werden. Zwischen beiden ist ein biegesteifer Schieber 60̸ in Richtung der Pfeile 67 beweglich geführt. Der Schieber 60̸ stützt sich nach beiden Seiten mit je einer Feder 57, 59 gegen die Außenwände des Verschlußstücks 81 ab. Am Schieber ist ein vorsprungartig ausgebildeter Riegel 62 vorgesehen, neben dem in Verschieberichtung -- Pfeile 67 -- zwei Ausnehmungen 65, 66 angeordnet sind. An den freien Enden des Schiebers 60̸ ist je eine Handhabe 63, 64 leicht über den Gehäuseumriß vorspringend vorgesehen. An der Unterseite des Verschlußstücks 81 ist eine T-förmige Nut vorgesehen, in die ein Anker 80̸ orthogonal zur Zeichnungsebene eingeführt ist. Die Einschubrichtung des Ankers 80̸ mit dem daran befestigten Zubehör 69 und die Betätigungsrichtung (Pfeile 67) des Schiebers 60̸ stehen rechtwinklig zueinander. An der Oberseite des Ankers 80̸ ist eine Nase 83 vorgesehen, die der Riegel 62 hintergreift. Zur Entriegelung des Zubehörs 69 wird der Schieber 60̸ an einer seiner Handhaben 63, 64 gegen die Kraft einer der Federn 57, 59 verschoben, so daß der Riegel 62 die Nase 83 freigibt, weil eine der Ausnehmungen 65, 66 am Schieber 60̸ sich vor die Nase 83 schiebt und dadurch der Anker 80̸ freigegeben wird und aus dem Verschlußstück 81 herausgezogen werden kann. Dabei ist es unbedeutend, welche der Handhaben betätigt wird und in welche Richtung die Handhaben 63, 64 geschoben werden.

Die in Fig.12 gezeigte Ausführungsform der Erfindung besteht aus einem Verschlußstück 91, einer Spannplatte 48 und einer zwischen beiden in Richtung der Schrauben 19, 20̸, die die Spannplatte 48 und das Verschlußstück 81 verbinden, beweglichen Brücke 70̸, die von einer Feder 75 gegen das Verschlußstück 91 gedrückt wird. An der Brücke 70̸ ist ein Riegel 82 ausgebildet, der eine Nase 83 am Anker 80̸ hintergreift und dadurch den Anker und das daran befestigte Zubehörteil 69 mit dem Verschlußstück verriegelt. An der Brücke sind, aus dem Gehäuse des Verschlußstückes herausragend, zwei Handhaben 73, 74 vorgesehen. Wird z.B. die die Handhabe 74 in Richtung des Pfeiles 84 betätigt, so schwenkt die gesamte Brücke 70̸ um den Schwenkpunkt 76 an der Außenseite des Verschlußstückes 71 in die mit 72 gestrichelt gezeichnete Position. Dabei wird die Nase 83 freigegeben und der Anker 80̸ kann senkrecht zur Zeichenebene aus dem Verschlußstück 91 herausgezogen werden. Die Entriegelung kann alternativ dadurch erfolgen, daß die Handhabe 74 entgegen Pfeil 84 betätigt wird. Dann ergibt sich die Position 72 der Brücke 70̸ geklappt auf die gegenüberliegende Seite des Verschlußstückes 91. Eine Betätigung der Handhabe 73 entsprechend Pfeil 68 führt gleichermaßen zu einer Entriegelung. Schließlich können beide Handhaben gleichzeitig entgegen Pfeil 84 bewegt werden, was ebenfalls zu einer Entriegelung des Ankers 80̸ mit seiner Nase 83 im Verschlußstück 91 führt. Die Entriegelung kann somit in jedem Falle mit einer Hand erfolgen. Die Vielseitigkeit der Möglichkeiten zur Entriegelung erlaubt auch eine Verankerung von Zubehör an relativ schwer zugänglichen Stellen an Zweirädern.

Bei den meisten gezeigten Ausführungsformen erfolgt die Entriegelung, d.h. die Freigabe des Ankers mit einer Bewegung des Riegels senkrecht zur Einschubrichtung des Ankers in das Verschlußstück und die Betätigungsrichtung der Handhabe weist, zumindest mit einer Richtungskomponente, in eine Richtung rechtwinklig zu der durch die beiden erstgenannten Bewegungsrichtungen aufgespannten Ebene.

Zusammenfassend ergibt sich eine besonders kompakte Befestigungsvorrichtung für Zubehör an Zweirädern, die sich durch eine minimale abkragende Bauhöhe auszeichnet und die eine Entriegelung alternativ und beliebig von einer oder von zwei Seiten her erlaubt, wobei beide Handhaben durch die gedrungene Bauweise gleichzeitig durch Umgreifen des Befestigungsrohres oder auch eines Rennsattels mit einer Hand eingedrückt werden können.

## Patentansprüche

1. Vorrichtung zur Befestigung von Zubehör (9) an einem Zweirad (35)
- mit einem Anker (6, 16, 80̸) am Zubehör (29) und mit einem Verschlußstück (7, 41, 91) am Zweirad oder umgekehrt, wobei der Anker (6, 16, 80̸) in dem Verschlußstück (7, 41, 91) am Zweirad verankert wird, wobei
c) - der Anker (6, 16, 80̸) am Verschlußstück (7, 41, 91) geführt wird und
d) - das Verschlußstück (7, 41, 91) zum Zwecke der Führung des Ankers eine dem Ankerprofil entsprechende Ausnehmung hat,
e) - mit einer oder zwei Handhaben (3, 43, 53, 63, 73) zur Betätigung eines Riegels (5, 15, 50̸, 62, 82), wobei
f) - der Riegel (5, 15, 50̸, 62, 82) in den Anker (6, 16, 80̸) eingreift,
**dadurch gekennzeichnet, daß**
g) - der Riegel (5, 15, 50̸, 62, 82) sich quer zur Längsmittelebene des in Einschubrichtung T-förmig ausgebildeten Ankerprofils und zu einer Längsseite des Verschlußstückes erstreckt und
h) - die Handhaben (3, 43, 53, 63, 73) zur Betätigung des Riegels (5, 15, 50̸, 62, 82) auf einer Längsseite des Verschlußstücks (7, 41, 91) angeordnet ist, von wo aus der Riegel (5, 15, 50̸, 62, 82) gegen die Kraft einer Feder betätigt wird.

2. Vorrichtung zur Befestigung von Zubehör nach Anspruch 1, **dadurch gekennzeichnet, daß** der Riegel (5, 15) an einer Blattfeder ausgebildet ist und daß die Einführungsrichtung (38) des Ankers (6, 16) in das Verschlußstück (7, 41) und die Betätigungsrichtung der Handhabe (3, 4, 43, 44) etwa orthogonal zueinander stehen.

3. Vorrichtung zur Befestigung von Zubehör nach einem der Ansprüche 1 oder 2, **dadurch gekennzeichnet, daß** zwei Handhaben (3, 4) an bezüglich des Riegels (5) gegenüberliegenden Längsenden (31, 32) des Riegels vorgesehen sind.

4. Vorrichtung nach einem der Ansprüche 1 bis 3, **dadurch gekennzeichnet, daß** alle Handhaben (3, 4) an Enden (31,32) der Blattfeder ausgebildet sind und jeder Handhabe (3, 4) ein bezüglich der Blattfeder gegenüberliegendes Widerlager (11, 12) für die Blattfeder zugeordnet ist.

5. Vorrichtung nach Anspruch 4, **dadurch gekennzeichnet, daß** der Riegel (5) etwa in der Längsmitte der Blattfeder angeordnet ist.

6. Vorrichtung nach Anspruch 1, **dadurch gekennzeichnet, daß** jeder Handhabe (3) am einen Längsende (31) der Blattfeder an deren gegenüberliegendem Längsende (32) ein Widerlager (11) zugeordnet ist.

7. Vorrichtung nach Anspruch 2, **dadurch gekennzeichnet, daß** an der Blattfeder ein hochgestellter Kragen (17) ausgebildet ist, der den eigentlichen Riegel bildet.

8. Vorrichtung nach Anspruch 7, **dadurch gekennzeichnet, daß** der Riegel (5) oder, wenn vorhanden, sein Kragen neben der Eingriffstelle (33) im Anker (6) im Verschlußstück (7) abgestutzt ist.

9. Vorrichtung nach Anspruch 3, **dadurch gekennzeichnet, daß** zwischen den Handhaben (43,44) ein federnd in Streckrichtung vorgespanntes Kniegelenk (49) vorgesehen ist.

10. Vorrichtung nach Anspruch 3 **dadurch gekennzeichnet, daß** der Riegel (82) an einer im Gehäuse des Verschlußstücks (91) in Verriegelungsrichtung insgesamt beweglich geführten und federnd in Verrieglungsposition gedrückten biegesteifen Brücke (70̸) ausgebildet ist, an deren Enden die Handhaben (73,74) angeordnet sind.

11. Vorrichtung nach Anspruch 3, **dadurch gekennzeichnet, daß** der Riegel (50̸) als von einer im Gehäuse der Vorrichtung gelagerten Welle (52) abkragender Haken ausgebildet ist und die Handhaben (53, 54) an den freien Wellenenden ausgebildet sind.

12. Vorrichtung nach Anspruch 1, **dadurch gekennzeichnet, daß** der Riegel (62) an einem Schieber (60̸) ausgebildet ist, der den Riegel (62) federnd in der Verriegelungsstellung hält, wobei beidseits des Riegels (62) am Schieber (60̸) Ausnehmungen (65, 66) vorgesehen sind, die den Anker (80̸) bei Verlagerung von Schieber (60̸) und Riegel (62) freigeben.

13. Vorrichtung nach Anspruch 1, **dadurch gekennzeichnet, daß** Handhaben (73, 74) und Riegel (82) als ein Teil ausgebildet sind.

## Claims

1. A device for fixing accessories (9) to a twowheeled vehicle (35),
- having an anchor means (6, 16, 80) an the accessory (29) and having a locking piece (7, 41, 91) an the twowheeled vehicle or vice versa,
- the anchor means (6, 16, 80) being anchored in the locking piece (7, 41,91) on the twowheeled vehicle,
the anchor means (6, 16, 80) being guided on the locking piece (7,41, 91), and
the locking piece (7,41, 91) having a recess, corresponding to the anchor means profile, for the purpose of guiding the anchor means,
having one or two handles (3, 43, 53, 63, 73) for actuating a locking bar (5, 15, 50, 62, 82),
the locking bar (5, 15, 50, 62, 82) engaging with the anchor means (6, 16, 80),
**characterized in that**
the locking bar (5, 15, 50, 62, 82) extends transversely in relation to the longitudinal centre plane of the anchor means profile, and in relation to a longitudinal side of the locking piece,
the profile of the anchor means being T-shaped seen in the direction of plugging in and,
to actuate the locking bar (5, 15, 50, 62, 82), the handle(s) (3, 43, 53, 63, 73) is/are arranged on a longitudinal side of the locking piece (7, 41, 91) from where the locking bar (5, 15, 50, 62, 82) is actuated in opposition to the force of a spring.

2. A device for fixing accessories according to Claim 1, **characterized in that** the locking bar (5, 15) is constructed on a leaf spring, and **in that** the direction (38) in which the anchor means (6, 16) is guided into the locking piece (7, 41), and the direction in which the handle (3, 4, 43, 44) is actuated are approximately orthogonal to one another.

3. A device for fixing accessories according to either of Claims 1 or 2, **characterized in that** two handles (3, 4) are provided at longitudinal ends (31, 32) of the locking bar (5), which longitudinal ends (31, 32) are opposite one another with respect to the locbng bar.

4. A device according to one of Claims 1 to 3, **characterized in that** all handles (3, 4) are constructed at the ends (31, 32) of the leaf spring, and each handle (3, 4) is associated with an abutment (11, 12) for the leaf spring, which abutments (11, 12) are opposite one another with respect to the leaf spring.

5. A device according to Claim 4, **characterized in that** the lockng bar (b) is arranged approximately in the longitudinal centre of the leaf spring.

6. A device according to Claim 1, **characterized in that** there is associated with each handle (3) at the one longitudinal end (31) of the leaf spring an abutment (11) at the opposite longitudinal end (32) thereof.

7. A device according to Claim 2, **characterized in that** there is constructed an the leaf spring an upright collar (17) which forms the actual locking bar.

8. A device according to Claim 7, **characterized in that** the locking bar (5), or if applicable its collar, is supported in the locking piece (7), in the vicinity of the point of engagement (33) with the anchor means.

9. A device according to Claim 3, **characterized in that** there is provided between the handles (43, 44) a hinged joint (49) which is pretensioned resiliently in the yield direction.

10. A device according to Claim 3, **characterized in that** the locking bar (82) is constructed on a rigid bridge (70) which is movably guided as a whole in the locking direction, and pressed resiliently into the locking position, in the housing of the locking piece (91), and an the ends of which the handles (73, 74) are arranged.

11. A device according to Claim 3, **characterized in that** the locking bar (50) is constructed as a hook which bends off in the shape of a collar from a shaft (52) borne in the housing of the device, and the handles (53, 54) are constructed at the free ends of the shaft.

12. A device according to Claim 1, **characterized in that** the locking bar (62) is constructed on a slide bar (60) which holds the locking bar (62) resiliently in the locking position, there being provided on either side of the locking bar (62) on the slide bar (60) recesses (65, 66) which release the anchor means (80) upon dislocation from the slide bar (60) and the locking bar (62).

13. A device according to Claim 1, **characterized in that** the handles (73, 74) and the locking bar (82) are constructed as one part.

## Revendications

1. Dispositif pour attacher des accessoires (9) sur une bicyclette (35),
- avec une ancre (6, 16, 80) sur les accessoires (29) et avec un obturateur (7, 41, 91) sur la bicyclette ou inversement,
- l'ancre (6, 16, 80) étant haubanée dans l'obturateur (7, 41, 91) sur la bicyclette
- l'ancre (6, 16, 80) étant guidée sur l'obturateur (7, 41, 91) et
- l'obturateur (7, 41, 91) possédant un creux correspondant au profilé d'ancrage pour le guidage de l'ancre, avec
- une ou deux manettes (3, 43, 53, 63, 73) pour actionner un verrou (5, 15, 50, 62, 82),
- le verrou (5, 15, 50, 62, 82) s'engrenant dans l'ancre (6, 16, 80),
- **caractérisé en ce que**
- le verrou (5, 15, 50, 62, 82) s'étend perpendiculairement au plan médian longitudinal du profilé d'ancrage et à un grand côté de l'obturateur et
- d'introduction le profilé d'ancrage ayant la forme d'un "T", vu dans le sens et
- **en ce que** la/les manette(s) (3, 43, 53, 63, 73) d'actionnement du verrou (5, 15, 50, 62, 82) est/sont disposée(s) sur un grand côté de l'obturateur (7, 41, 91) d'où le verrou (5, 15, 50, 62, 82) est actionné contre l'effet d'un ressort.

2. Dispositif pour attacher des accessoires selon la revendication 1, **caractérisé en ce que** le verrou (5, 15) est conçu sur un ressort à lames et **en ce que** le sens d'introduction (38) de l'ancre (6, 16) dans l'obturateur (7, 41) et le sens d'actionnement de la manette (3, 4, 43, 44) sont pratiquement orthogonaux entre eux.

3. Dispositif pour attacher des accessoires selon l'une des revendications 1 ou 2, **caractérisé en ce que** deux manettes (3, 4) sont prévues aux extrémités longitudinales (31, 32) du verrou, opposées par rapport au verrou (5).

4. Dispositif selon l'une des revendications 1 à 3, **caractérisé en ce que** toutes les manettes (3, 4) sont conçues aux extrémités (31, 32) du ressort à lames et **en ce qu'**une butée (11, 12) opposée par rapport au ressort à lames est affectés, pour celuici, à chaque manette (3, 4).

5. Dispositif selon la revendication 4, **caractérisé en ce que** le verrou (5) est disposé pratiquement au centre longitudinal du ressort à lames.

6. Dispositif selon la revendication 1, **caractérisé en ce qu'**une butée (11) est affectée à chaque manette (3) à une extrémité longitudinale (31) du ressort à lames, à l'extrémité longitudinale (32) opposée de celui-ci.

7. Dispositif selon la revendication 2, **caractérisé en ce qu'**un collet (17) est placé en haut sur le ressort à lames, collet qui constitue le verrou propre.

8. Dispositif selon la revendication 7, **caractérisé en ce que** le verrou (5) ou, le .cas échéant, son collet sont appuyés près du point d'engrènement (33) dans l'ancre (6), dans l'obturateur (7).

9. Dispositif selon la revendication 3, **caractérisé en ce qu'**une articulation de genouillère (49) élastiquement précontrainte dans le sens de l'allongement est prévue entre les manettes (43, 44).

10. Dispositif selon la revendication 3, **caractérisé en ce que** le.verrou (82) est conçu sur un pont (70) résistant à la flexion, guidé de façon globalement mobile dans le sens du verrouillage, dans le boïtier de l'obturateur (91) et pressé élastiquement en postillon de verrouillage, pont aux extrémités duquel sont disposées les manettes (73, 74).

11. Dispositif selon la revendication 3, **caractérisé en ce que** le verrou (50) se présente sous la forme d'un crochet faisant saillie à partir d'un arbre (52) logé dans le boîtier du dispositif et **en ce que** les manettes (53, 54) sont conçues aux extrémités libres de l'arbre.

12. Dispositif selon la revendication 1, **caractérisé en ce que** le verrou (62) est conçu sur une barre (60) qui maintient élastiquement le verrou (62) dans la position de blocage, des creux (65, 66) étant prévus des deux côtés du verrou (62), sur la barre (60), creux qui débloquent l'ancre (80) lors du déplacement de la barre (60) et du verrou (62).

13. Dispositif selon la revendication 1, **caractérisé en ce que** les manettes (73, 74) et le verrou (82) se présentent sous la forme d'une pièce.
